# EUROPÄISCHE PATENTSCHRIFT

(11) **EP 1 391 355 B1**
(45) Veröffentlichungstag und Bekanntmachung des Hinweises auf die Patenterteilung: **24.10.2007**
(21) Anmeldenummer: 03090218.3
(22) Anmeldetag: 15.07.2003
(51) Int. Cl.: B60R 21/276, B60R 21/16

(54) **Gassack für ein Airbagmodul**
Air bag for an air bag module
Sac gonflable pour un module de sac de sécurité gonflable

(30) Priorität: 07.08.2002 DE 10236859
(43) Veröffentlichungstag der Anmeldung: 25.02.2004
(73) Patentinhaber: TAKATA CORPORATION, Minato-ku, Tokyo 106-8510 (JP)
(72) Erfinder: Bossecker, Maximilian, 76532 Baden-Baden (DE); Getz, Robert, 89077 Ulm (DE); Sendelbach, Hans-Peter, 89250 Senden (DE); Weyrich, Christian, 89231 Neu-Ulm (DE); Riedel, Andreas, 89269 Illerberg (DE)
(74) Vertreter: Fischer, Uwe

(56) Entgegenhaltungen:
- EP-A- 0 788 933
- WO-A-00/56580
- WO-A-01/34436
- DE-A- 10 018 170
- DE-A- 19 640 322
- PATENT ABSTRACTS OF JAPAN Bd. 1997, Nr. 10, 31. Oktober 1997 (1997-10-31) -& JP 09 142239 A (SUZUKI MOTOR CORP), 3. Juni 1997 (1997-06-03)
- PATENT ABSTRACTS OF JAPAN Bd. 1998, Nr. 01, 30. Januar 1998 (1998-01-30) -& JP 09 249085 A (SUZUKI MOTOR CORP), 22. September 1997 (1997-09-22)

## Beschreibung

Die Erfindung bezieht sich auf einen Gassack mit den Merkmalen gemäß dem Oberbegriff des Anspruchs 1; ein solcher Gassack dient zum Schutz eines Fahrzeuginsassen im Falle eines Unfalls.

Ein derartiger Gassack ist aus der deutschen Offenlegungsschrift 196 40 322 A1 bekannt. Bei dem vorbekannten Gassack hält ein Steuerband eine Abströmöffnung des Gassacks solange offen, bis der Gassack einen vorgegebenen Entfaltungszustand erreicht hat. Sobald der vorgegebene Entfaltungszustand erreicht ist, reißt das Steuerband ab und ein Verschlusselement verschließt die Abströmöffnung des Gassacks. Der vorbekannte Gassack weist diese Abströmöffnung, die also zu Beginn des Aufblasens noch offen ist und erst anschließend verschlossen wird, im Hinblick auf sogenannte "out of position" - Fälle auf. Unter "out of position"-Fällen werden solche Fälle verstanden, bei denen der durch den Airbag zu schützende Fahrzeuginsasse nicht die normale Sitzposition einnimmt, sondern eine anormale Sitzposition, insbesondere eine solche Sitzposition, bei der der Fahrzeuginsasse sich sehr dicht an dem noch nicht entfalteten Airbag bzw. Gassack befindet und somit mit voller Wucht von dem sich aufblasenden Gassack getroffen wird. Um zu vermeiden, dass es bei solchen out of position"-Fällen zu ernsthaften Verletzungen des Fahrzeuginsassen kommt, ist bei dem vorbekannten Gassack die Abströmöffnung vorgesehen: diese Abströmöffnung ist beim Aufblasen des Gassackes zunächst noch offen, damit bei einem vorzeitigen Kontakt das Gassacks mit dem Fahrzeuginsassen das Gas aus dem Gassack entweichen kann, wodurch der Aufschlag das Gassacks auf den Fahrzeuginsassen deutlich abgemildert wird. Hat dann der Gassack einen vorbestimmten Entfaltungszustand bzw. "Aufblaszustand" erreicht oder überschritten, kann davon ausgegangen werden, dass kein "out of position"-Fall vorliegt, sondern das der Fahrzeuginsasse seine normale Sitzposition einnimmt. Ab diesem Zeitpunkt kann dann die Abströmöffnung verschlossen werden. Dieses Verschließen wird insbesondere deshalb durchgeführt, um zu erreichen, dass der Gassack möglichst schnell aufgeblasen wird und seinen Endzustand -das heißt seine Endgröße und seinen Enddruck - möglichst schnell erreicht.

Darüber hinaus ist aus der europäischen Offenlegungsschrift EP 0 788 933 A2 ein Gassack mit zwei Teilgassäcken bekannt, bei dem eine Überströmöffnung vorhanden ist, durch die Gas aus einem Teilgassack in den anderen Teilgassack (und umgekehrt) überströmen kann.

Aus der Schrift DE-A-100 18 170 ist auch ein Gassack mit zwei zeitlichen nacheinander aufblasbaren Teilabschnitten bekannt, bei dem eine Ventilanordnung zwischen den zwei Teilabschnitten angeordnet ist, die von einem entgegen der Ausbreitungsrichtung ein- oder umgestülpten, schlauch- oder rüsselförmigen Materialabschnitt gebildet wird. Im "out of position" Fall kann die verschlossene Ventilanordnung nicht durch Ausstülpen oder Ausfalten des Rüssels umgesteuert (d.h. geöffnet) werden, da der zusammengefaltete Sekundärabschnitt im Wege ist. Im Normalschutzfall ist der Fahrzeuginsasse einer Entfaltung des Sekundärabschnitts nicht im Wege und daher kann durch den sich im Primärvolumen aufbauenden Druck die zuvor verschlossene Ventilanordnung durch ausstülpen des Rüssels geöffnet werden.

Der Erfindung liegt nun die Aufgabe zugrunde, einen Gassack anzugeben, bei dem eine Abström- und/oder Überströmöffnung des Gassacks besonders einfach und gasdicht verschlossen und/oder besonders einfach geöffnet wird.

Diese Aufgabe wird bei einem Gassack der eingangs angegebenen Art erfindungsgemäß durch die kennzeichnenden Merkmale des Anspruchs 1 gelöst. Vorteilhafte Ausgestaltungen des Gassacks sind in den Unteransprüchen angegeben.

Erfindungsgemäß wird bei dem Gassack die Abdichtung der Abström- und/oder Überströmöffnung dadurch erreicht, dass der Öffnungsbereich der Gassackhüllealso der Bereich, in dem die Abström- und/oder Überströmöffnung in der Gassackhülle angeordnet ist - vollständig in die Gassackhülle hineingezogen, also hineingestülpt wird. Die Abdichtung der Öffnung erfolgt dann dadurch, dass das hineingestülpte Hüllenmaterial durch den Innendruck des Gassacks zusammengepresst wird, wodurch eine quasi vollständige Abdichtung der Abström- und/oder Überströmöffnung erreicht wird.

Ein besonderer Vorteil des erfindungsgemäßen Gassacks bzw. der erfindungsgemäßen Abdichtung ist dabei darin zu sehen, dass der Gassack sehr kostengünstig hergestellt werden kann, weil zusätzliche Verschlusselemente - wie sie beispielsweise bei dem in der eingangs genannten deutschen Offenlegungsschrift 196 40 322 A1 beschriebenen vorbekannten Gassack vorhanden sind - eingespart werden. Durch das Wegfallen zusätzlicher Verschlusselemente wird gleichzeitig auch die Zuverlässigkeit des erfindungsgemäßen Gassacks erhöht; denn jedes zusätzliche Element erhöht - wegen seines stets vorhandenen Ausfallrisikos - zwangsläufig die Gefahr eines technischen Defekts.

Der erfindungsgemäße Gassack kann vorteilhaft bei zwei- oder mehrteiligen Gassäcken, also bei Gassäcken mit zwei oder mehr Teilgassäcken, eingesetzt werden; die Abström- und/oder Überströmöffnung kann dann zwischen zwei Teilgassäcken angeordnet sein, so dass sich durch Öffnen oder Verschließen der Abström- und/oder Überströmöffnung somit die Reihenfolge des Aufblasens der Teilgassäcke und /oder der Druck in den Teilgassäcken steuern lässt. Die Abström- und/oder Überströmöffnung wirkt dann als reine "Überströmöffnung".

Zusätzlich oder stattdessen kann eine Abström- und/oder Überströmöffnung auch an der äußeren Gassackhülle , also an der Außenwand des Gassacks, angebracht sein, so dass bei geöffneter Abström- und/oder Überströmöffnung das Gas aus dem Gassack austritt. Die Abström- und/oder Überströmöffnung wirkt in diesem Fall als reine "Abströmöffnung". Eine solche Abströmöffnung kann beispielsweise vorgesehen werden, um bei "out-off-position"-Unfällen das Verletzungsrisiko zu reduzieren.

Ist - im Hinblick auf einen "out of position"-Fall - davon auszugehen, dass sich der Fahrzeuginsasse zu dicht vor dem Airbag bzw. dem Gassack aufhält, wird es als vorteilhaft angesehen, wenn das Steuerband mit seinem anderen Ende an der dem Fahrzeuginsassen zugewandten Seite angeordnet ist, weil das Steuerband dann den vom Fahrzeuginsassen einzuhaltenden Sicherheitsabstand - quasi als Längenmaß - unmittelbar vorgibt, ab dem ein vollständiges Aufblasen des Gassacks mit verschlossener Abström- und /oder Überströmöffnung im Hinblick auf ein Verletzungsrisiko als zulässig angesehen werden kann.

Ist hingegen davon auszugehen, dass sich der Fahrzeuginsasse seitlich neben dem sich aufblasenden Gassack aufhält und von einer Seitenwand des Gassacks getroffen werden könnte, wird es als vorteilhaft angesehen, wenn das andere Ende des Steuerbandes im Seitenbereich das Gassackhülle befestigt ist. Bei einem seitlichen Anbringen des Steuerbandes ist dabei das seitliche Ausbreiten des Gassacks ein Maß dafür, ob ein "out of position"- Fall vorliegt oder nicht.

Sollte es - beispielsweise aufgrund fertigungstechnischer Gesichtspunkte - einfacher sein, die Steuerbänder an anderen Stellen als den eigentlich optimalen Stellen zu befestigen, so wird es als vorteilhaft angesehen, wenn das Steuerband über eine an der Innenseite der Gassackhülle angeordnete Umlenkeinrichtung geführt ist. So kann beispielsweise die Umlenkeinrichtung in dem dem Fahrzeuginsassen zugewandten Bereich an der Gassackhülle befestigt sein und das andere Ende des Steuerbandes im Seitenbereich der Gassackhülle befestigt werden.

Besonders einfach und damit vorteilhaft lässt sich eine solche Umlenkeinrichtung durch eine Schlaufe bilden, durch die das Steuerband hindurch gezogen ist.

Im übrigen kann das Steuerband auch mit Hilfssteuerbändern in Verbindung stehen, die mit ihrem anderen Ende jeweils an verschiedenen Stellen der Gassackhülle befestigt sind. Mit den Hilfsteuerbändern können logische "oder" - Verknüpfungen gebildet werden; das heißt, dass die Abström- und/oder Überströmöffnung geschlossen wird, wenn mindestens ein Hilfsteuerband vollständig gespannt ist.

Außerdem wird es als vorteilhaft angesehen, wenn mindestens zwei Steuerbänder eingesetzt werden, die an gegenüberliegenden Stellen der Abström- und/oder Überströmöffnung angebracht sind; denn bei dieser Ausgestaltung des Gassacks wird das hineingestülpte Gassackmaterial auseinander gezogen, wodurch ein Verknüllen des hineingestülpten Gassackmaterial vermieden und ein besonders gasdichtes Abdichten durch den Innendruck des Gassacks erreicht wird.

Ein quasi vollständiges Abdichten der Abström- und/oder Überströmöffnung wird in vorteilhafter Weise dadurch erreicht, dass die Öffnung schlauch- oder rüsselförmig ist, weil dann das hinein gestülpte Gassackmaterial aufgrund seiner Form ideal zusammengepresst werden kann, wodurch eine optimale Abdichtung erreicht wird.

Im Übrigen wird es als vorteilhaft angesehen, wenn das Steuerband darüber hinaus an mindestens einer Stelle in seinem Mittenbereich, also in dem Bereich zwischen seinen beiden Enden, mit der Gassackhülle verbunden ist; eine solche Verbindung kann beispielsweise durch eine Aufreißnaht oder einen Klettverschluss oder dergleichen gebildet sein. Die Funktion eines solchen Befestigungselements besteht darin, dass es zu einem Hineinstülpen des - beispielsweise schlauchförmigen - Hüllenbereichs erst dann kommt, wenn der Gassack einen gewissen Mindestdruck erreicht hat und das - druckgesteuerte- Befestigungselement geöffnet wird; das Verschließen der Abström- und/oder Überströmöffnung erfolgt somit dann nicht nur entfaltungsgesteuert - wie ohne das Befestigungselement -, sondern auch druckgesteuert, also abhängig vom Innendruck des Gassacks.

Vorteilhaft kann der erfindungsgemäße Gassack beispielsweise als 2-Kammer-Side-Airbag eingesetzt werden. 2-Kammer-Side-Airbags weisen üblicherweise einen Teilgassack für den Becken(Pelvis)-Bereich des Fahrzeuginsassen und einen Teilgassack für den Brust(Thorax)-Bereich des Fahrzeuginsassen auf.

Vorzugsweise ist bei einem 2-Kammer-Side-Airbag die Abström- und/oder Überströmöffnung zwischen dem Pelvis-Teilgassack und dem Thorax-Teilgassack angeordnet.

Diese Überströmöffnung ist bevorzugt im ersten Aufblasstadium geschlossen, so dass sich der Pelvis-Teilgassack sehr schnell aufblasen lässt. Durch den schnellen Druckaufbau wird der Fahrzeuginsasse sehr schnell aus dem Intrusionsbereich - im Falle eines Seitenaufpralls - hinausgeschoben. Nachdem der Pelvis-Teilgassack diese Aufgabe erfüllt hat, ist ein besonders hoher Gasdruck im Pelvis-Teilgassack nicht mehr erforderlich, so dass die Überströmöffnung mit dem Steuerband geöffnet werden und der hohe Gasdruck des Pelvis-Teilgassacks zum Aufblasen des Thorax-Teilgassacks mitverwendet werden kann. Der Thorax-Teilgassack wird also geringfügig zeitverzögert aufgeblasen. Nach dem Aufblasen des Thorax-Teilgassacks kann dieser den Fahrzeuginsassen abfangen und vor einem Aufprall auf der Seitenstruktur des Kraftfahrzeugs schützen.

Stattdessen kann (können) die Abström- und/oder Überströmöffnung(en) bei einem zwei- oder mehrteiligen Gassack auch derart angesteuert werden, dass in einer ersten Phase des Aufblasens des Gassacks die Teilgassäcke gleichmäßig aufgeblasen werden und dass nach Abschluss dieser ersten Phase des Aufblasens die Abström- und/oder Überströmöffnung(en) geschlossen wird (werden), so dass sich in den Teilgassäcken ein unterschiedlicher Gasdruck ausbilden kann.

Zur Erläuterung der Erfindung zeigen:
- Figuren 1 und 2: ein erstes Ausführungsbeispiel für einen erfindungsgemäßen Gassack,
- Figur 3: ein zweites Ausführungsbeispiel für einen erfindungsgemäßen Gassack,
- Figur 4: ein drittes Ausführungsbeispiel für einen erfindungsgemäßen Gassack,
- Figuren 5 und 6: ein viertes Ausführungsbeispiel für einen erfindungsgemäßen Gassack ,
- Figuren 7 bis 9: ein fünftes Ausführungsbeispiel für einen erfindungsgemäßen Gassack,
- Figuren 10 bis 12: ein sechstes Ausführungsbeispiel für einen erfindungsgemäßen Gassack und
- Figuren 13 bis 15: ein siebentes Ausführungsbeispiel für einen erfindungsgemäßen Gassack.

Elemente, die in verschiedenen Ausführungsbeispielen vorhanden sind, tragen in den entsprechenden Figuren jeweils dieselben Bezugszeichen.

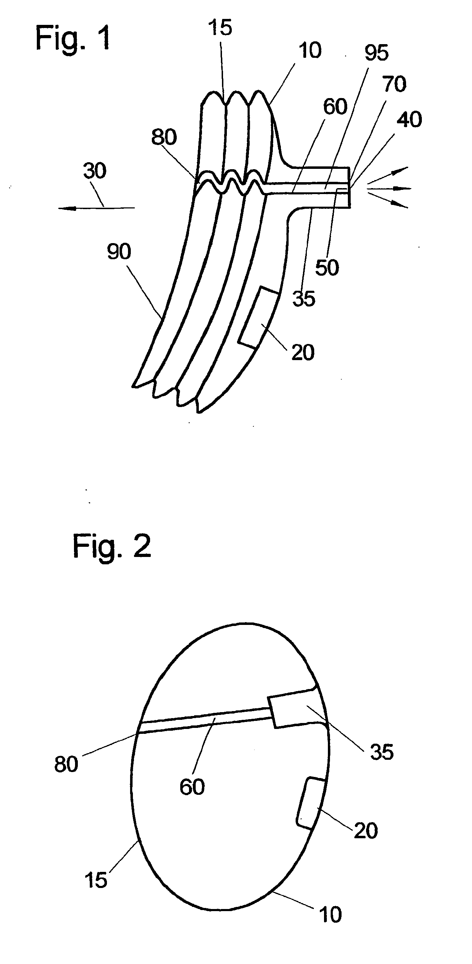

In der Figur 1 ist ein Gassack 10 mit einer noch nicht vollständig entfalteten Gassackhülle 15 dargestellt, die vom einem Gasgenerator 20 aufgeblasen wird. Die Entfaltungsrichtung ist in der Figur 1 durch einen Pfeil 30 dargestellt.

Der Gassack 10 weist einen schlauch- bzw. rüsselförmigen Hüllenbereich 35 mit einer Öffnung auf, durch die das vom dem Gasgenerator 20 gelieferte Gas aus dem Gassack 10 ausströmen kann; diese Öffnung wird als Abströmöffnung bezeichnet und trägt das Bezugszeichen 40.

Im Bereich 50 der Abströmöffnung 40 ist ein Steuerband 60 mit seinem einen Ende 70 befestigt. Das andere Ende 80 des Steuerbandes 60 ist mit dem vorderen Bereich 90 des Gassacks 10 verbunden; der vordere Bereich 90 ist dem in der Figur 1 nicht dargestellten Fahrzeuginsassen zugewandt.

Bei der Darstellung gemäß der Figur 1 ist die Abströmöffnung 40 geöffnet, so dass vom Gasgenerator 20 gelieferte Gas den Gassack 10 verlassen kann.

Die Figur 2 zeigt den Gassack 10 gemäß der Figur 1 im aufgeblasenen Zustand. Man erkennt, dass das Steuerband 60 gespannt ist und den schlauchförmigen Hüllenbereich 35 in das Innere des Gassacks 10 hinein gezogen, also hinein gestülpt hat. Durch den Innendruck des Gassacks 10 wird der hinein gestülpte Hüllenbereich 35 zusammen gepresst, so dass es zu einem Verschließen der Abströmöffnung 40 kommt.

Bei dem Ausführungsbeispiel gemäß den Figuren 1 und 2 kann das Steuerband 60 darüber hinaus in seinem Mittenbereich, also in dem Bereich zwischen den beiden Enden 70 und 80, mit der Gassackhülle 15 verbunden sein; eine solche Verbindung kann beispielsweise durch eine Aufreißnaht oder einen Klettverschluss oder dergleichen gebildet sein. Die Funktion eines solchen druckgesteuerten Befestigungselements 95 besteht darin, dass es zu einem Hineinstülpen des schlauchförmigen Hüllenbereichs 35 erst dann kommt, wenn der Gassack 10 einen gewissen Mindestdruck erreicht hat; das Verschließen der Abströmöffnung 40 erfolgt somit dann nicht nur entfaltungsgesteuert - wie ohne das Befestigungselement - , sondern auch druckgesteuert, also abhängig vom Innendruck des Gassacks 10. Konkret kommt es zu dem Verschließen des Gassacks nämlich erst dann, wenn aufgrund des Innendrucks das Befestigungselement öffnet; denn erst dann kann das Steuerband 60 den schlauchförmigen Hüllenbereich 35 in den Gassack hineinziehen.

Ein solches Befestigungselement kann im Übrigen auch in den anderen, nachfolgend beschriebenen Ausführungsbeispielen eingesetzt werden.

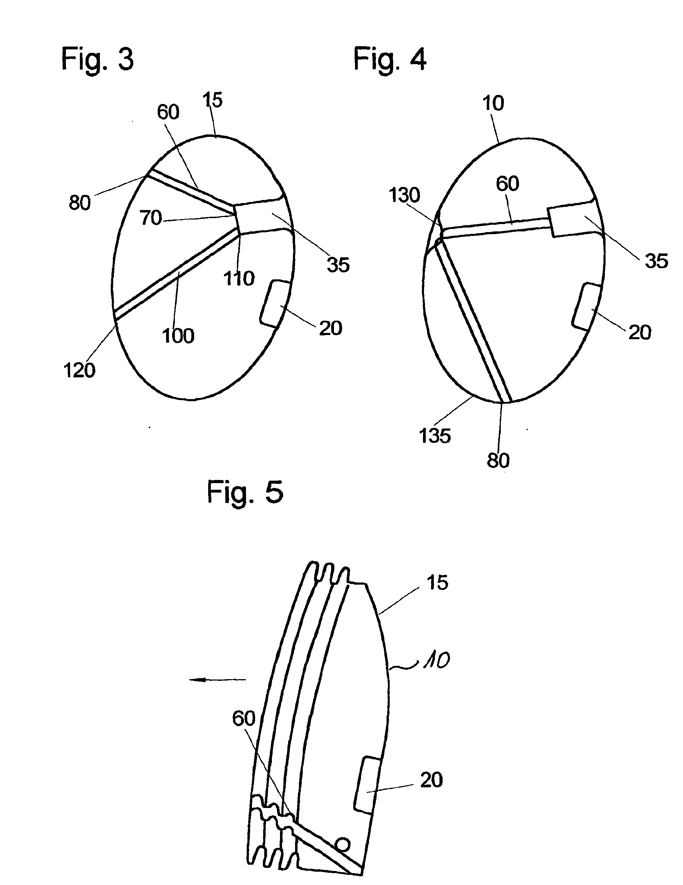

Die Figur 3 zeigt ein zweites Ausführungsbeispiel für einen erfindungsgemäßen Gassack - und zwar in aufgeblasenem Zustand -, bei dem zwei Steuerbänder eingesetzt sind, nämlich das Steuerband 60 und ein weiteres Steuerband 100. Das weitere Steuerband 100 ist mit seinem einen Ende 110 mit dem rüsselförmigen Hüllenbereich 35 und mit seinem anderen Ende 120 mit der Gassackhülle 15 verbunden. Die beiden Enden 70 und 110 der beiden Steuerbänder 60 und 100 sind an verschiedenen, beispielsweise gegenüberliegenden Stellen des rüsselförmigen Hüllenbereichs 35 angebracht und halten den Hüllenbereich 35 derart auseinander, das ein Verknüllen des Hüllenmaterials vermieden und ein optimales Zusammenpressen und Abdichten der Öffnung durch den Innendruck des Gassack 10 erreicht wird.

Die Figur 4 zeigt ein drittes Ausführungsbeispiel für einen erfindungsgemäßen Gassack. Man erkennt eine Umlenkeinrichtung 130, die durch eine Schlaufe gebildet ist. Durch die Schlaufe 130 ist das Steuerband 60 hindurch gezogen, so dass es zu einem Umlenken des am Seitenbereich 135 der Gassackhülle 15 befestigten Steuerbandes 60 kommt. Durch die Umlenkeinrichtung wird insbesondere ein insgesamt größerer "Einzugsweg" bereit gestellt; außerdem wird eine gezieltere Abbremsung ausgewählter Luftsackbereiche ermöglicht.

Durch die Umlenkeinrichtung wird darüber hinaus quasi eine Art logischer "und"-Verknüpfung gebildet; denn zu einem Hineinstülpen des Hüllenbereiches 35 kommt es nur, wenn die Gassackhülle 15 sowohl an der Stelle, an der die Umlenkeinrichtung 130 befestigt ist, als auch an der Stelle, an der das andere Ende des Steuerbandes 60 befestigt ist, ausreichend aufgeblasen ist.

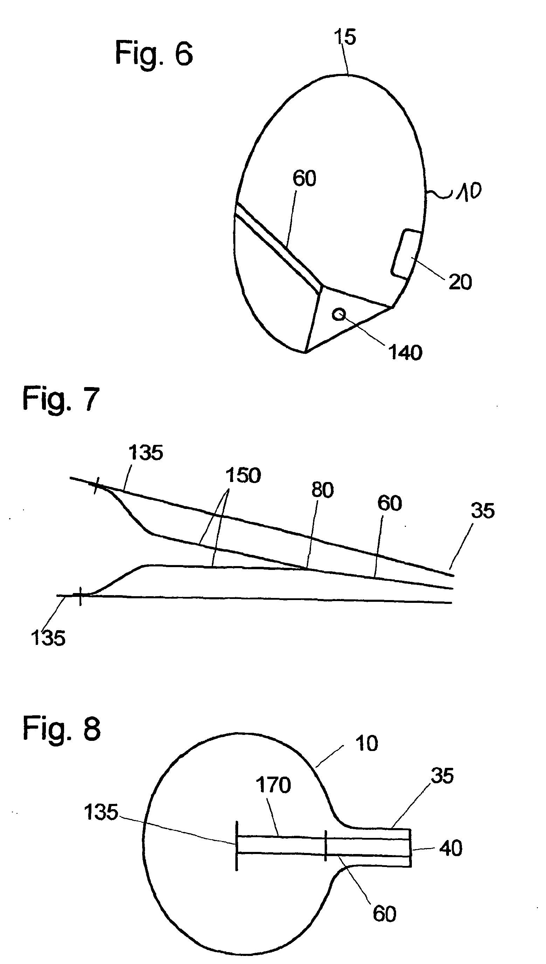

Die Figuren 5 und 6 zeigen ein viertes Ausführungsbeispiel für einen erfindungsgemäßen Gassack. Die Gassackhülle 15 weist als Abströmöffnung ein sogenanntes "Venthole" 140 auf, das - gemäß Figur 6 - in den Innenbereich des Gassacks 10 hinein gestülpt wird.

Die Figur 5 zeigt dabei den Gassack 10 zu einem Zeitpunkt, wo er noch nicht komplett entfaltet ist; das Venthole ist somit noch geöffnet und Gas kann entweichen. Bei der Darstellung gemäß der Figur 6 ist der Gassack 10 vollständig aufgeblasen; der "Venthole"-Bereich ist in das Gassackinnere hinein gestülpt und durch den Innendruck des Gassacks verschlossen.

Die Figuren 7 bis 9 zeigen ein fünftes Ausführungsbeispiel für einen erfindungsgemäßen Gassack. Bei den Darstellungen gemäß den Figuren 7 und 8 (Seitenansicht und Draufsicht) ist der Gassack 10 noch nicht völlig entfaltet und der rüsselförmige Hüllenbereich 35 ist noch nicht in das Gassackinnere hinein gestülpt.

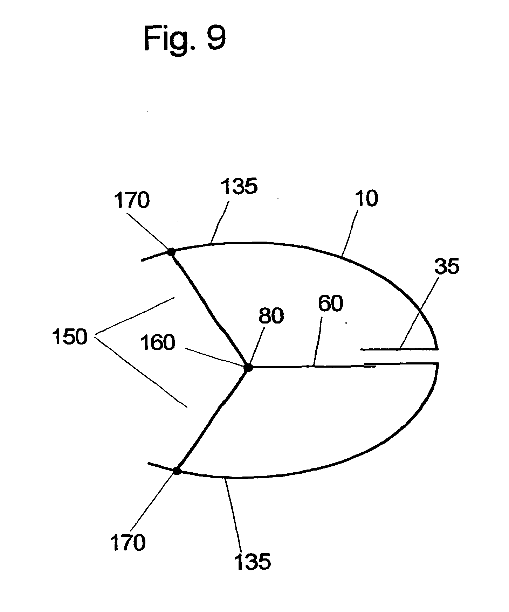

Bei der Darstellung gemäß der Figur 9 (Seitenansicht) ist der Gassack 10 aufgeblasen und der Hüllenbereich 35 hinein gestülpt, wodurch die Abströmöffnung 40 geschlossen ist.

Bei dem fünften Ausführungsbeispiel wird die Abströmöffnung 40 offen gehalten, wenn es zu einer Behinderung der seitlichen Entfaltung der Gassackhülle - zum Beispiel im "out of position"- Fall -kommt. Kann sich der Gassack hingegen bis zu seiner vorgesehenen Dicke entfalten, so verschließt sich die Abströmöffnung 40.

Erreicht wird dieses Verhalten des Gassacks durch die zwei Hilfssteuerbänder 150, die jeweils mit ihrem einen Ende 160 mit dem anderen Ende 80 des Steuerbandes 60 und jeweils mit ihrem anderen Ende 170 mit der seitlichen Gassackhülle 135 verbunden sind.

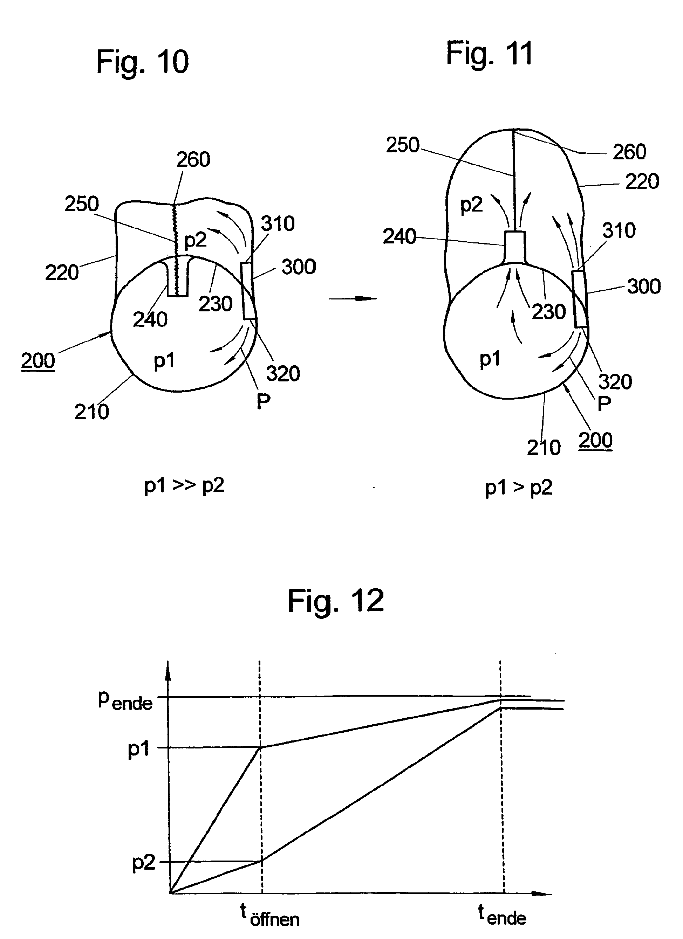

In den Figuren 10 bis 12 ist ein sechstes Ausführungsbeispiel für einen erfindungsgemäßen Gassack dargestellt. Bei diesem Gassack handelt es sich um einen Zwei-Kammer-Side-Airbag 200, der einen Pelvis-Teilgassack 210 und einen Thorax-Teilgassack 220 aufweist. Der Pelvis-Teilgassack 210 ist von dem Thorax-Teilgassack 220 durch eine Trennschicht (Trennmembran) 230 getrennt, die Teil der Gassackhülle des Gassacks 200 ist. Die Trennschicht 230 weist eine Überströmöffnung 240 auf, die durch einen in der Trennschicht 230 ausgebildeten "Rüssel" gebildet ist.

An dem Rüssel 240 ist ein Ende eines Steuerbands 250 angebracht; das andere Ende des Steuerbandes 250 ist an einer Stelle 260 an dem Thorax-Teilgassack 220 befestigt. Der Zwei-Kammer-Side-Airbag 200 wird mittels eines Gasgenerators 300 aufgeblasen. Hierzu weist der Gasgenerator 300 eine dem Thorax-Teilgassack 220 zugewandte Gas-Öffnung 310 und eine dem Pelvis-Teilgassack 210 zugewandte Gas-Öffnung 320 auf. Der Gasgenerator 300 ist dabei derart ausgestaltet, dass der in den Pelvis-Teilgassack 210 einströmende Gasstrom etwa genauso groß wie der in den Thorax-Teilgassack 220 einströmende Gasstrom ist. Die beiden Teilgassäcke 210 und 220 weisen unterschiedliche Volumina auf, so dass sich bei gleicher Gasstrombefüllung unterschiedliche Drucknivaus aufbauen. Dies führt dazu, dass der Pelvis-Teilgassack 210 deutlich schneller aufgeblasen wird als der Thorax-Teilgassack 220. In dieser ersten Phase des Aufblasens ist der Rüssel bzw. die Überstromöffnung 240 aufgrund des Innendrucks im Pelvis-Teilgassack 210 noch geschlossen, so dass es zu keinem Überströmen von Gas zwischen dem Pelvis-Teilgassack 210 und dem Thorax-Teilgassack 220 kommen kann.

Der zeitliche Verlauf des Aufblasens des Zwei-Kammer-Side-Airbags 200 gemäß der Figur 10 ist in der Figur 12 dargestellt. Dabei bezeichnet p1 den Gasdruck im Pelvis-Teilgassack 210 und p2 den Gasdruck im Thorax-Teilgassack 220. Man erkennt, dass in einer ersten Phase zwischen t = 0 und t = t_{öffnen} der Pelvis-Teilgassack 210 deutlich schneller aufgeblasen wird als der Thorax-Teilgassack 220. Sobald sich der Thorax-Teilgassack 220 soweit entfaltet hat, dass sein Steuerband 250 gestrafft wird, wird der sich zuvor in den Pelvis-Teilgassack 210 hinein erstreckende Rüssel 240 auf dem Pelvis-Teilgassack 210 herausgestülpt und in den Thorax-Teilgassack 220 hineingestülpt. Dies führt dazu, dass nunmehr der Rüssel 240 bzw. die Überstromöffnung 240 geöffnet wird und es zu einem Überströmen von Gas vom Pelvis-Teilgassack 210 in den Thorax-Teilgassack 220 kommen kann. Dies zeigt die Figur 11.

Der zeitliche Druckverlauf während der Phase des Überströmens von Gas vom Pelvis-Teilgassack 210 in den Thorax-Teilgassack 220 ist in der Figur 12 dargestellt; konkret liegt die Phase des Überströmens - also die zweite zeitliche Phase des Aufblasens des Zwei-Kammer-Side-Airbags 200 - zwischen den Zeitpunkten t = t_{öffnen} und t = t_{ende} . Nach Erreichen des Zeitpunktes t = t_{ende} ist der Zwei-Kammer-Side-Airbag 200 vollständig aufgeblasen, so dass es zu keiner wesentlichen Änderung des Druckes im Gassack mehr kommt.

Bei dem Zwei-Kammer-Side-Airbag 200 gemäß den Figuren 10 bis 12 handelt es sich also um einen Gassack mit einem Pelvis-Teilgassack 210 und einem Thorax-Teilgassack 220, die zeitlich nacheinander aufgeblasen werden. Zunächst kommt es zu einem relativ schnellen Aufblasen des Pelvis-Teilgassacks 210, so dass sich in dem Pelvis-Teilgasack 210 sehr schnell ein relativ hoher Gasdruck aufbaut. Durch diesen Druckaufbau wird der Fahrzeuginsasse im Falle eines seitlichen Fahrzeugaufpralls relativ schnell aus dem Intrusionsbereich herausgeschoben, so dass Verletzungen, insbesondere des Beckenbereichs, des Fahrzeuginsassen verhindert werden.

Nachdem der Pelvis-Teilgassack 210 diese Hauptaufgabe, nämlich den Fahrzeuginsassen aus dem Intrusionsbereich herauszuschieben, erfüllt hat, ist kein besonders hoher Druck im Pelvis-Teilgassack 210 mehr erforderlich, so dass der in dem Pelvis-Teilgassack 210 vorhandene hohe Gasdruck zum Aufblasen des Thorax-Teilgassackes 220 verwendet werden kann. Dieses "Mitverwenden" des Gasdrucks im Thorax-Teilgassack 210 hat zweierlei Vorteile: zum einen wird das Aufblasen des Thorax-Teilgassacks 220 beschleunigt, weil nämlich sowohl das Gas des Gasgenerators 300 als auch das Gas aus dem Pelvis-Teilgassack 210 zum Aufblasen verwendet wird. Zum anderen wird auch Gas eingespart, weil das Gas des Pelvis-Teilgassacks 210 quasi zweimal verwendet wird, nämlich in einer ersten Phase zum Aufblasen des Pelvis-Teilgassackes 210 und in einer zweiten Phase zum Aufblasen des Thorax-Teilgassackes 220. Aufgrund der mehrfachen Verwendung des Gases kann der Gasgenerator relativ klein - bzw. kleiner es als sonst erforderlich wäre - dimensioniert werden.

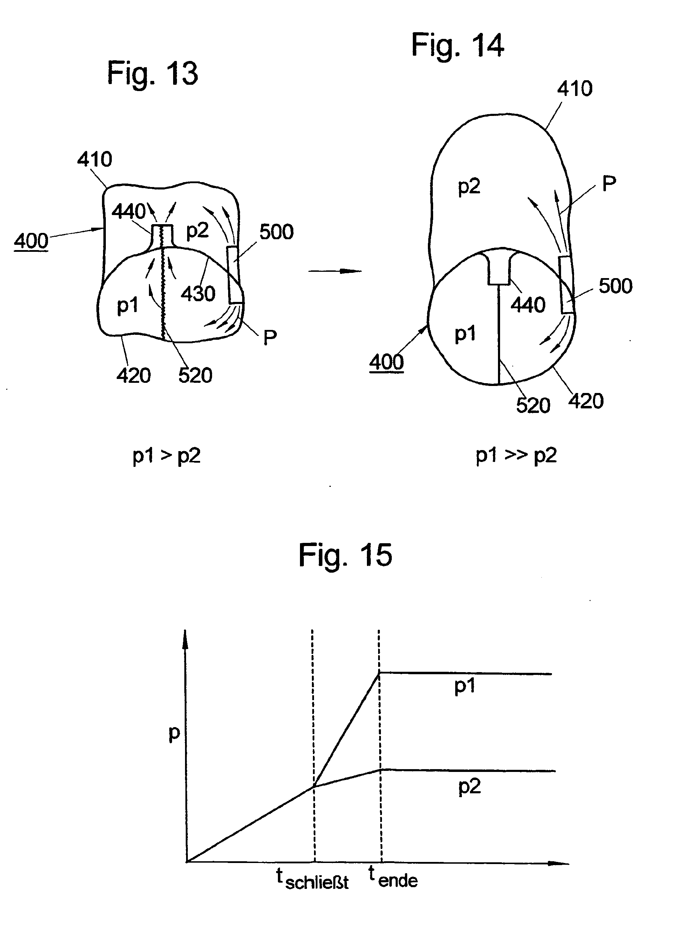

In den Figuren 10 und 11 - sowie nachfolgend in den Figuren 13 und 14 - markieren Pfeile P den Gasstrom innerhalb des Gassacks; aus Gründen der Übersichtlichkeit ist dabei in den Figuren jeweils nur ein einziger Pfeil mit einem Bezugszeichen versehen.

In den Figuren 13 bis 15 ist ein siebentes Ausführungsbeispiel für einen erfindungsgemäßen Gassack dargestellt. Der Gassack 400 weist einen oberen Teilgassack 410 und einen unteren Teilgassack 420 auf. Die beiden Teilgassäcke 410 und 420 sind durch eine Trennschicht 430 getrennt. In der Trennschicht 430 ist eine Überströmöffnung 440 in Form eines Rüssels vorgesehen, durch den Gas in einer ersten Phase des Aufblasens (Figur 13) von dem unteren Teilgassack 420 in den oberen Teilgassack 410 strömen kann.

Der Gassack 400 wird mittels eines Gasgenerators 500 aufgeblasen, der derart dimensioniert ist, dass der Druckaufbau in den beiden Teilgassäcken 410 und 420 in einer ersten Phase des Aufblasens relativ ähnlich verläuft. Dies zeigt die Figur 15, in der sich erkennen lässt, dass zwischen dem Zeitpunkt t = 0 und t = t_{schließt} die Druckverläufe p1 und p2 in den beiden Teilgassäcken 410 und 420 relativ ähnlich verlaufen. In der Figur 15 bezeichnet dabei das Bezugszeichen p1 den Gasdruck in dem unteren Teilgassack 420 und das Bezugszeichen p2 den Gasdruck in dem oberen Teilgassack 410.

Nach Abschluss der ersten Phase des Aufblasens hat sich der untere Teilgassack 420 soweit entfaltet, dass ein mit dem Rüssel 440 und der Gassackhülle des unteren Teilgassacks 420 verbundenes Steuerband 520 den Rüssel 440 aus dem Bereich des oberen Teilgassacks 410 herauszieht und in den Bereich des unteren Teilgassacks 420 hineinstülpt.

Die Figur 14 zeigt den Gassack 400 nach dem Umstülpen des Rüssels 440. Aufgrund des Innendrucks im unteren Teilgassack 420 wird der Rüssel 440 geschlossen, so dass es zu keinem Überströmen von Gas zwischen den beiden Teilgassäcken 410 und 420 mehr kommen kann. Da die beiden Teilgassäcke 410 und 420 durch den als Ventil arbeitenden Rüssel 440 voneinander getrennt sind, kann sich nunmehr in den beiden Teilgassäcken 410 und 420 ein unterschiedlicher Gasdruck ausbilden; ob sich tatsächlich ein Druckunterschied in den beiden Teilgassäcken 410 und 420 ausbildet bzw. wie groß der Druckunterschied in den beiden Teilgassäcken 410 und 420 ist, hängt von der Dimensionierung des Gasgenerators 500 ab.

In der Figur 15 ist - beispielhaft - der zeitliche Verlauf des Gasdrucks in den beiden Teilgassäcken 410 und 420 nach dem Verschluss des Rüssels 440 dargestellt. In dem Zeitraum zwischen den Zeitpunkten t = t_{schließt} und t = t_{ende} laufen die beiden Gasdrücke p1 und p2 auseinander; konkret erhöht sich der Druck p1 im unteren Teilgassack 420 schneller als der Gasdruck im oberen Teilgassack 410. Nach Abschluss des Aufblasens bleibt der Gasdruck in den beiden Teilgassäcken konstant. Dies in der Figur 15 für die Zeitpunkt t > t_{ende} dargestellt.

Bei dem Ausführungsbeispiel gemäß den Figuren 13 bis 15 gewährleistet der Rüssel 440 bzw. das durch den Rüssel 440 gebildete Ventil, dass in einem ersten Stadium des Aufblasens beide Teilgassäcke 410 und 420 im wesentlichen einen vergleichbaren Druckverlauf nehmen. Nach Abschluss dieser ersten Phase des Aufblasens des Gassacks wird mit dem Ventil bzw. dem Rüssel 440 der Gasstrom zwischen den beiden Teilgassäcken 410 und 420 unterbrochen, so dass jeder der beiden Teilgassäcke 410 bzw. 420 den jeweils für diesen vorgesehenen Enddruck erreichen kann.

### Bezugszeichenliste

- Nr. 10: Gassack
- Nr. 15: Gassackhülle
- Nr. 20: Gasgenerator
- Nr. 30: Pfeil
- Nr. 35: rüsselförmiger Hüllenbereich
- Nr. 40: Abströmöffnung
- Nr. 50: Bereich der Öffnung
- Nr.60: Steuerband
- Nr. 70: ein Ende des Steuerbandes
- Nr. 80: ein anderes Ende des Steuerbandes
- Nr. 90: Vorderer Bereich der Gassackhülle, dem Fahrzeuginsassen zugewandt
- Nr. 95: Befestigungselement
- Nr.100: Weiteres Steuerband
- Nr.110: ein Ende des weiteren Steuerbandes
- Nr.120: ein anderes Ende des weiteren Steuerbandes
- Nr.130: Umlenkeinrichtung bzw. Schlaufe
- Nr.135: Seitenbereich der Gassackhülle
- Nr.140: Venthole
- Nr.150: Hilfsteuerbänder
- Nr.160: ein Ende der Hilfssteuerbänder
- Nr.170: ein anderes Ende der Hilfssteuerbänder
- Nr.200: Gassack
- Nr.210: Pelvis-Teilgassack
- Nr.220: Thorax-Teilgassack
- Nr.230: Trennschicht
- Nr.240: Überströmöffnung
- Nr.250: Steuerband
- Nr.260: Anschluss des Steuerbandes am Thorax-Teilgassack
- Nr.300: Gasgenerator
- Nr.310, 320: Gasöffnungen des Gasgenerators
- Nr.400: Gassack
- Nr.410: oberer Teilgassack
- Nr.420: unterer Teilgassack
- Nr.430: Trennschicht
- Nr.440: Rüssel
- Nr.500: Gasgenerator
- Nr.520: Steuerband
- p1: Druck
- p2: Druck

## Patentansprüche

1. Gassack (10) für ein Airbagmodul zum Schutz eines Fahrzeuginsassen
- mit mindestens einer verschließbaren Abström- und/oder Überströmöffnung (40) in der Gassackhülle (15) und
- mindestens einem Steuerband (60), das beim Aufblasen des Gassacks (10) bei Erreichen eines vorgegebenen Entfaltungszustandes des Gassacks (10) die zunächst verschlossene Abström- und/oder Überströmöffnung (40) öffnet oder die zunächst offene Abström- und/oder Überströmöffnung (40) verschließt,
**dadurch gekennzeichnet, dass**
- im Bereich (50) der Abström- und/oder Überströmöffnung (40) ein Ende (70) des Steuerbandes (60) an der Gassackhülle (15) befestigt ist und
- das Steuerband (60) mit seinem anderen Ende (80) derart mit der Gassackhülle (15) in Verbindung steht, dass das Steuerband (60) bei Erreichen des vorgegebenen Entfaltungszustandes
- den im Bereich (50) der Abström- und/oder Überströmöffnung (40) befindlichen Teil der Gassackhülle (15) in den Gassack hineinstülpt, wodurch die Abström- und/oder Überströmöffnung (40) durch den hineingestülpten Bereich der Gassackhülle (15) aufgrund des Innendrucks des Gassacks verschlossen wird , oder
- den im Bereich (50) der Abström- und/oder Überströmöffnung (40) befindlichen und in den Gassack hineingestülpten Teil der Gassackhülle (15) herausstülpt, wodurch die zuvor verschlossene Abström- und/oder Überströmöffnung (40) geöffnet wird.

2. Gassack nach Anspruch 1, **dadurch gekennzeichnet, dass** der Gassack mindestens zwei Teilgassäcke (210, 220, 410, 420) aufweist, die miteinander in Strömungsverbindung stehen, und dass die mindestens eine Abström- und/oder Überströmöffnung (240, 440) zwischen den zwei Teilgassäcken (210, 220, 410, 420) angeordnet ist.

3. Gassack nach Anspruch 1, **dadurch gekennzeichnet, dass** die mindestens eine Abström- und/oder Überströmöffnung (40) an der Außenwand (15) des Gassacks (10) derart angebracht ist, dass bei geöffneter Abström- und/oder Überströmöffnung (40) das Gas aus dem Gassack (10) austritt.

4. Gassack nach einem der vorangehenden Ansprüche, **dadurch gekennzeichnet, dass** das andere Ende (80) des Steuerbandes (60) in dem dem Fahrzeuginsassen zugewandten Bereich (90) an der Gassackhülle (15) befestigt ist.

5. Gassack nach einem der vorangehenden Ansprüche 1 bis 3, **dadurch gekennzeichnet, dass** das andere Ende (80) des Steuerbandes (60) im Seitenbereich (135) der Gassackhülle (15) befestigt ist.

6. Gassack nach einem der vorangehenden Ansprüche, **dadurch gekennzeichnet, dass** das Steuerband (60) über eine an der Innenseite der Gassackhülle (15) angeordnete Umlenkeinrichtung (130) geführt ist.

7. Gassack nach Anspruch 6, **dadurch gekennzeichnet, dass** die Umlenkeinrichtung (130) in dem dem Fahrzeuginsassen zugewandten Bereich (90) an der Gassackhülle (15) befestigt ist und das andere Ende (80) des Steuerbandes (60) im Seitenbereich (135) der Gassackhülle befestigt ist.

8. Gassackhülle nach Anspruch 6 oder 7, **dadurch gekennzeichnet, dass** die Umlenkeinrichtung (130) durch eine Schlaufe gebildet ist, durch die das Steuerband (60) hindurch gezogen ist.

9. Gassack nach einem der vorangehenden Ansprüche, **dadurch gekennzeichnet, dass** das Steuerband (60) mit seinem anderen Ende (80) mit jeweils einem Ende (160) mindestens zweier Hilfssteuerbänder (150) verbunden ist, deren anderes Ende (170) jeweils mit der Gassackhülle (15) in Verbindung steht, sei es unmittelbar oder mittelbar über weitere Sekundärbänder oder über Umlenkeinrichtungen.

10. Gassack nach einem der vorangehenden Ansprüche, **dadurch gekennzeichnet, dass** mindestens ein weiteres Steuerband (100) vorgesehen ist, dessen eines Ende (110) im Bereich (50) der Abström- und/oder Überstromöffnung (40) angebracht ist, und zwar an einer anderen Stelle als das eine Ende des einen Steuerbands (60), insbesondere an einer dem einen Ende des einen Steuerbandes (60) gegenüberliegenden Stelle.

11. Gassack nach einem der vorangehenden Ansprüche, **dadurch gekennzeichnet, dass** die Gassackhülle (15) im Bereich (50) der Abström- und/oder Überströmöffnung (40) schlauch- oder rüsselförmig ausgeführt ist.

12. Gassack nach einem der vorangehenden Ansprüche, **dadurch gekennzeichnet, dass** das Steuerband (60) an mindestens einer Stelle im Bereich zwischen seinen beiden Enden durch ein Befestigungselement zusätzlich an der Gassackhülle (15) befestigt ist, wobei das Befestigungselement derart ausgestaltet ist, dass die Befestigung bei Erreichen eines vorgegebenen Innendrucks des Gassacks gelöst wird.

13. Gassack nach Anspruch 12, **dadurch gekennzeichnet, dass** das Befestigungselement durch eine Aufreißnaht gebildet ist, die die Gassackhülle (15) und das Steuerband (60) miteinander verbindet.

14. Gassack nach Anspruch 12, **dadurch gekennzeichnet, dass** das Befestigungselement durch einen Klettverschluss gebildet ist, der die Gassackhülle (15) und das Steuerband (60) miteinander verbindet.

15. Gassack nach einem der vorangehenden Ansprüche, **dadurch gekennzeichnet, dass** der Gassack ein Zwei-Kammer-Side-Airbag (200) mit einem Pelvis-Teilgassack (210) und einem Thorax-Teilgassack (220) ist.

16. Gassack nach Anspruch 15, **dadurch gekennzeichnet, dass** der Thorax-Teilgassack (220) und der Pelvis-Teilgassack (210) durch mindestens eine Abström- und/oder Überströmöffnung miteinander in Verbindung stehen.

17. Gassack nach Anspruch 16, **dadurch gekennzeichnet, dass** der Gassack derart ausgestaltet ist, dass der Pelvis-Teilgassack (210) schneller als der Thorax-Teilgassack (220) aufgeblasen wird und dass nach Abschluss der ersten Phase des Aufblasens des Gassacks die Abström- und/oder Überströmöffnung (240) geöffnet wird, so dass Gas des Pelvis-Teilgassacks (210) in den Thorax-Teilgassack (220) überströmen kann.

18. Gassack nach einem der vorangehenden Ansprüche, **dadurch gekennzeichnet, dass** die Abström- und/oder Überströmöffnung (440) des Gassacks derart angesteuert wird, das in einer ersten Phase des Aufblasens des Gassacks (400) beide Teilgassäcke (410 und 420) gleichmäßig aufgeblasen werden und dass nach Abschluss dieser ersten Phase des Aufblasens die Abström- und/oder Überströmöffnung geschlossen wird, so dass sich in den beiden Teilgassäcken (410 und 420) ein unterschiedlicher Gasdruck ausbilden kann.

## Claims

1. A gas bag (10) for an airbag module for protecting a vehicle occupant,
- with at least one closable outflow and/or overflow orifice (40) in the gas bag envelope (15), and
- at least one control band (60) which, during the inflation of the gas bag (10), when a predetermined state of deployment of the gas bag (10) is reached, opens the initially closed outflow and/or overflow orifice (40) or closes the initially open outflow and/or overflow orifice (40),
**characterized in that**
- one end (70) of the control band (60) is fastened to the gas bag envelope (15) in the region (50) of the outflow and/or overflow orifice (40), and
- the control band (60) is connected at its other end (80) to the gas bag envelope (15) in such a way that, when the predetermined state of deployment is reached, the control band (60)
- slips into the gas bag that part of the gas bag envelope (15) which is located in the region (50) of the outflow and/or overflow orifice (40), with the result that the outflow and/or overflow orifice (40) is closed by the slipped-in region of the gas bag envelope (15) by virtue of the internal pressure of the gas bag, or
- slips out that part of the gas bag envelope (15) which is located in the region (50) of the outflow and/or overflow orifice (40) and is slipped into the gas bag, with the result that the previously closed outflow and/or overflow orifice (40) is opened.

2. The gas bag as claimed in claim 1, **characterized in that** the gas bag has at least two part gas bags (210, 220, 410, 420) which are flow-connected to one another, and **in that** the at least one outflow and/or overflow orifice (240, 440) is arranged between the two part gas bags (210, 220, 410, 420).

3. The gas bag as claimed in claim 1, **characterized in that** the at least one outflow and/or overflow orifice (40) is formed on the outer wall (15) of the gas bag (10) in such a way that, with the outflow and/or overflow orifice (40) open, the gas emerges from the gas bag (10).

4. The gas bag as claimed in one of the preceding claims, **characterized in that** the other end (80) of the control band (60) is fastened to the gas bag envelope (15) in the region (90) facing the vehicle occupant.

5. The gas bag as claimed in one of the preceding claims 1 to 3, **characterized in that** the other end (80) of the control band (60) is fastened in the lateral region (135) of the gas bag envelope (15).

6. The gas bag as claimed in one of the preceding claims, **characterized in that** the control band (60) is led over a deflection device (130) arranged on the inside of the gas bag envelope (15).

7. The gas bag as claimed in claim 6, **characterized in that** the deflection device (130) is fastened to the gas bag envelope (15) in the region (90) facing the vehicle occupant, and the other end (80) of the control band (60) is fastened in the lateral region (135) of the gas bag envelope.

8. The gas bag envelope as claimed in claim 6 or 7, **characterized in that** the deflection device (130) is formed by a loop through which the control band (60) is drawn.

9. The gas bag as claimed in one of the preceding claims, **characterized in that** the control band (60) is connected at its other end (80) in each case to one end (160) of at least two auxiliary control bands (150), the other end (170) of which is connected in each case to the gas bag envelope (15), whether directly or indirectly via further secondary bands or via deflection devices.

10. The gas bag as claimed in one of the preceding claims, **characterized in that** at least one further control band (100) is provided, one end (110) of which is attached in the region (50) of the outflow and/or overflow orifice (40), specifically at a point other than the one end of the one control band (60), in particular at a point located opposite the one end of the one control band (60).

11. The gas bag as claimed in one of the preceding claims, **characterized in that** the gas bag envelope (15) has a hose-shaped or blow pipe-shaped design in the region (50) of the outflow and/or overflow orifice (40).

12. The gas bag as claimed in one of the preceding claims, **characterized in that** the control band (60) is additionally fastened at at least one point in the region between its two ends to the gas bag envelope (15) by means of a fastening element, the fastening element being designed in such a way that the fastening is released when a predetermined internal pressure of the gas bag is reached.

13. The gas bag as claimed in claim 12, **characterized in that** the fastening element is formed by a tear-open seam which connects the gas bag envelope (15) and the control band (60) to one another.

14. The gas bag as claimed in claim 12, **characterized in that** the fastening element is formed via a touch-and-close fastening which connects the gas bag envelope (15) and the control band (60) to one another.

15. The gas bag as claimed in one of the preceding claims, **characterized in that** the gas bag is a two-chamber side airbag (200) with a pelvic part gas bag (210) and with a thoracic part gas bag (220).

16. The gas bag as claimed in claim 15, **characterized in that** the thoracic part gas bag (220) and the pelvic part gas bag (210) are connected to one another by means of at least one outflow and/or overflow orifice.

17. The gas bag as claimed in claim 16, **characterized in that** the gas bag is designed in such a way that the pelvic part gas bag (210) is inflated more quickly than the thoracic part gas bag (220), and **in that**, after the conclusion of the first phase of inflation of the gas bag, the outflow and/or overflow orifice (240) is opened, so that gas of the pelvic part gas bag (210) can flow over into the thoracic part gas bag (220).

18. The gas bag as claimed in one of the preceding claims, **characterized in that** the outflow and/or overflow orifice (440) of the gas bag is activated in such a way that, in the first phase of inflation of the gas bag (400), the two part gas bags (410 and 420) are inflated uniformly, and **in that**, after the conclusion of this first phase of inflation, the outflow and/or overflow orifice is closed, so that a different gas pressure can be formed in the two part gas bags (410 and 420).

## Revendications

1. Sac à gaz (10) pour un module de sac de sécurité gonflable destiné à protéger un passager de véhicule
- avec au moins un orifice d'évacuation et/ou de trop-plein (40) verrouillable dans l'enveloppe du sac à gaz (15) et
- au moins une bande de commande (60) qui ouvre, lors du gonflage du sac à gaz (10) lorsque celui-ci a atteint un état de déploiement prescrit, l'orifice d'évacuation et/ou de trop-plein (40) pour l'instant fermé ou ferme l'orifice d'évacuation et/ou de trop-plein (40) pour l'instant ouvert,
**caractérisé en ce que**
dans la zone (50) de l'orifice d'évacuation et/ou de trop-plein (40), une extrémité (70) de la bande de commande (60) est fixée sur l'enveloppe du sac à gaz (15) et la bande de commande (60) est en liaison par le biais de son autre extrémité (80) avec l'enveloppe du sac à gaz (15) de telle manière que la bande de commande (60), lorsque le sac à gaz a atteint un état de déploiement prescrit,
- enfonce dans le sac à gaz la partie de l'enveloppe du sac à gaz (15) se trouvant dans la zone (50) de l'orifice d'évacuation et/ou de trop-plein (40), grâce à quoi l'orifice d'évacuation et/ou de trop-plein (40) est fermé par la zone enfoncée de l'enveloppe du sac à gaz (15) en raison de la pression interne du sac à gaz, ou
- ressort la partie de l'enveloppe du sac à gaz (15) se trouvant dans la zone (50) de l'orifice d'évacuation et/ou de trop-plein (40) et enfoncée dans le sac à gaz, grâce à quoi l'orifice d'évacuation et/ou de trop-plein (40) précédemment fermé est ouvert.

2. Sac à gaz selon la revendication 1, **caractérisé en ce que** le sac à gaz présente au moins deux sacs à gaz partiels (210, 220, 410, 420) qui sont en liaison d'évacuation l'un avec l'autre, et **en ce qu'**au moins l'un des orifices d'évacuation et/ou de trop-plein (240, 440) est disposé entre les deux sacs à gaz partiels (210, 220, 410, 420).

3. Sac à gaz selon la revendication 1, **caractérisé en ce qu'**au moins l'un des orifices d'évacuation et/ou de trop-plein (40) est monté sur la paroi extérieure (15) du sac à gaz (10) de telle manière qu'en cas d'ouverture de l'orifice d'évacuation et/ou de trop-plein (40), le gaz sorte du sac à gaz (10).

4. Sac à gaz selon l'une quelconque des revendications précédentes, **caractérisé en ce que** l'autre extrémité (80) de la bande de commande (60) est fixée dans la zone (90) dirigée vers le passager du véhicule sur l'enveloppe du sac à gaz (15).

5. Sac à gaz selon l'une quelconque des revendications précédentes 1 à 3, **caractérisé en ce que** l'autre extrémité (80) de la bande de commande (60) est fixée dans la zone latérale (135) de l'enveloppe du sac à gaz (15).

6. Sac à gaz selon l'une quelconque des revendications précédentes, **caractérisé en ce que** la bande de commande (60) est guidée sur un dispositif de renversement (130) disposé sur le côté intérieur de l'enveloppe du sac à gaz (15).

7. Sac à gaz selon la revendication (6), **caractérisé en ce que** le dispositif de renversement (130) est fixé dans la zone (90) dirigée vers le passager du véhicule sur l'enveloppe du sac à gaz (15) et l'autre extrémité (80) de la bande de commande (60) est fixée dans la zone latérale (135) de l'enveloppe du sac à gaz.

8. Enveloppe du sac à gaz selon la revendication 6 ou 7, **caractérisée en ce que** le dispositif de renversement (130) est formé par une boucle, au travers de laquelle est passée la bande de commande (60).

9. Sac à gaz selon l'une quelconque des revendications précédentes, **caractérisé en ce que** la bande de commande (60) est reliée par le biais de son autre extrémité (80) à respectivement une extrémité (160) au moins de deux bandes de commande auxiliaires (150), dont l'autre extrémité (170) est en liaison respectivement avec l'enveloppe du sac à gaz (15), que ce soit directement ou indirectement par le biais d'autres bandes secondaires ou de dispositifs de renversement.

10. Sac à gaz selon l'une quelconque des revendications précédentes, **caractérisé en ce qu'**au moins une autre bande de commande (100) est prévue, dont une extrémité (110) est montée dans la zone (50) de l'orifice d'évacuation et/ou de trop-plein (40), et ce à un autre endroit que l'une des extrémités d'une des bandes de commande (60), notamment à un endroit opposé à l'une des extrémités de l'une des bandes de commande (60).

11. Sac à gaz selon l'une quelconque des revendications précédentes, **caractérisé en ce que** l'enveloppe du sac à gaz (15) est réalisée en forme de tuyau flexible ou en forme de trompe dans la zone (50) de l'orifice d'évacuation et/ou de trop-plein (40).

12. Sac à gaz selon l'une quelconque des revendications précédentes, **caractérisé en ce que** la bande de commande (60) est fixée à au moins un endroit dans la zone entre ses deux extrémités par un élément de fixation en outre sur l'enveloppe du sac à gaz (15), l'élément de fixation étant conçu de telle manière que la fixation soit détachée lorsque le sac à gaz a atteint une pression interne prescrite.

13. Sac à gaz selon la revendication 12, **caractérisé en ce que** l'élément de fixation est formé par une couture de déchirure qui relie l'enveloppe du sac à gaz (15) et la bande de commande (60) entre elles.

14. Sac à gaz selon la revendication 12, **caractérisé en ce que** l'élément de fixation est formé par une bande Velcro qui relie l'enveloppe du sac à gaz (15) et la bande de commande (60) entre elles.

15. Sac à gaz selon l'une quelconque des revendications précédentes, **caractérisé en ce que** le sac à gaz est un sac de sécurité gonflable latéral à deux chambres (200) avec un sac à gaz partiel pour le bassin (210) et un sac à gaz partiel pour le thorax (220).

16. Sac à gaz selon la revendication 15, **caractérisé en ce que** le sac à gaz partiel pour le thorax (220) et le sac à gaz partiel pour le bassin (210) sont en liaison par au moins un orifice d'évacuation et/ou de trop-plein.

17. Sac à gaz selon la revendication 16, **caractérisé en ce que** le sac à gaz est conçu de telle manière que le sac à gaz partiel pour le bassin (210) est gonflé plus rapidement que le sac à gaz partiel pour le thorax (220) et **en ce qu'**à la fin de la première phase de gonflage du sac à gaz, l'orifice d'évacuation et/ou de trop-plein (240) est ouvert de sorte que le gaz du sac à gaz partiel pour le bassin (210) puisse se répandre dans le sac à gaz partiel pour le thorax (220).

18. Sac à gaz selon l'une quelconque des revendications précédentes, **caractérisé en ce que** l'orifice d'évacuation et/ou de trop-plein (440) du sac à gaz est commandé de telle manière que dans une première phase du gonflage du sac à gaz (400), les deux sacs à gaz partiels (410 et 420) soient gonflés uniformément et **en ce qu'**à la fin de cette première phase de gonflage, l'orifice d'évacuation et/ou de trop-plein est fermé, de sorte qu'une pression de gaz différente puisse être réalisée dans les deux sacs à gaz partiels (410 et 420).
